# EUROPEAN PATENT SPECIFICATION

(11) **EP 2 306 034 B1**
(45) Date of publication and mention of the grant of the patent: **25.05.2011**
(21) Application number: 09172007.8
(22) Date of filing: 01.10.2009
(51) Int. Cl.: F16B 37/04

(54) **Retained Nut Assembly**
Vorrichtung zur Fixierung einer Schraubenmutter
Élément de maintien d'écrou

(43) Date of publication of application: 06.04.2011
(73) Proprietor: Bailey Caravans Limited, Bristol BS3 2SS (GB)
(72) Inventor: Coke, Colin, Bristol, BS12 2AU (GB); Linklater, Andrew Grant, Cheddar, Somerset BS27 3XT (GB); Rowles, Andrew John, Bristol, BS41 9DL (GB)
(74) Representative: Worthington, Richard Easton

(56) References cited:
- DE-A1- 2 255 298
- GB-A- 2 039 659
- US-A- 6 146 071

## Description

### FIELD OF THE INVENTION

The present invention relates to a retained nut assembly, a bolted joint using the assembly and a method of joining two components using the assembly. The invention is particularly, though not exclusively, suitable for joining body shell panels of a mobile vehicle, such as a caravan or the like.

### BACKGROUND OF THE INVENTION

The construction of mobile vehicles, such as caravans, motor-homes, box vans, etc., has changed little in the past few decades. Typically, the mobile vehicle has a body shell constructed from large composite panels, which form the front, back, sides, roof and floor of the vehicle. With existing construction techniques, the panels are bonded and directly screwed together at their panel edges. The consistency of the join, and the resulting structural rigidity, are reliant on the consistency of the materials being screwed through and in to, and the skill of the operator. Bolting components together can provide more consistent results but presents problems in terms of accessibility as it is generally necessary to hold a spanner or socket over the nut whilst the bolt is tightened to prevent it from spinning (or vice versa). GB2039659A describes a retained nut assembly according to the preamble of claim 1.

### SUMMARY OF THE INVENTION

A first aspect of the invention provides a retained nut assembly, comprising an internally threaded nut, and an insert configured to receive and retain the nut in a predetermined position within the insert and to prevent relative rotation between the retained nut and the insert, wherein the insert defines a channel having an open end and a closed end, such that the nut can be introduced into the channel from the open end, and characterised by a resilient rib which clamps the nut in the channel.

A further aspect of the invention provides a joint between two components, wherein one of the components includes the retained nut assembly, and the components are bolted together by threading a bolt into the retained nut.

A yet further aspect of the invention provides a method of joining two components, the method comprising inserting the retained nut assembly in one of the components, passing a bolt through the other component and threading the bolt into the retained nut, and tightening the bolt to join the two components.

The invention is advantageous in that the nut is presented and retained in the correct position to receive the bolt without the need to be held by hand. The bolt can therefore be threaded into the nut as a one man operation, even where the nut is inaccessible.

The insert defines a channel having an open end and a closed end, such that the nut can be introduced into the channel from the open end. This enables the nut to be easily introduced into the insert. The insert includes a resilient rib which clamps the nut in the channel.

Sidewalls of the channel may be spaced apart by a distance approximately equal to the width of the nut. Opposing facets of the nut will therefore be flush with the sidewalls, preventing rotation of the nut with respect to the insert.

The closed end of the channel may be shaped to cooperate with the nut. In one embodiment the nut is a standard hex nut and the closed end of the channel has a pair of surfaces set at 120 degrees to one another. Adjacent facets of the nut will therefore locate against this pair of surfaces when the nut is in the predetermined position. This also help prevent rotation of the nut with respect to the insert. For nuts having a different shape to hex nuts, the cooperating shape of the closed end of the channel can be adapted accordingly.

The rib is preferably sufficiently deformable that the nut can be readily inserted into the channel, yet sufficiently resilient that the nut is retained in the predetermined position in the channel. Beneficially, the rib may be more flexible towards the open end of the channel, and more rigid towards the closed end. The rib may be supported within the insert by walls of the insert.

The insert may define a seat which receives the nut in the predetermined position. The seat may include a recess, or hole, into which a portion of the nut enters to locate the nut. In a preferred embodiment, the seat is formed in the resilient rib. In this way, the seated nut is clamped into the channel, thereby locating the nut in three-dimensional space within the insert and preventing its rotation relative to the insert. The nut may therefore be slid along the channel until it "snaps" into the seat, where it is retained.

The insert may have a through hole coaxial with the nut axis of rotation. In one embodiment, the through hole receives the bolt. The through hole may be formed in one side of the insert. The through hole may be concentric with the seat.

The insert may be moulded from plastics material, such as by injection moulding.

The nut is preferably a locking nut, such as a Nyloc nut.

The insert accurately positions the retained nut therein. However, when bolting components together, what is important is the alignment of the nut with the bolt. To correctly align the retained nut, a pocket may be formed in one of the components to be joined, for receiving the insert. So long as the pocket is positioned correctly, introducing the insert into the pocket should correctly position the retained nut in three-dimensional space with respect to the component. By correctly positioning the bolt hole in the other component, alignment of the nut and bolt can be ensured when the two components are brought together.

The insert may have a flange which lies flush against an outer surface of the component. This may be used to accurately position the insert when the pocket is of indeterminate depth, for example. The insert may have resiliently deformable outer wall portions such that the insert can be readily introduced into the pocket and yet the wall portions act to grip the pocket to securely retain the insert in the pocket.

This invention is particularly, though not exclusively, suitable for use in bolting together a pair of panels, or bolting a panel to another component. In a preferred embodiment, the invention is used to join body panels of a mobile vehicle, such as a caravan, motor-home, box van etc. In one embodiment, the invention is used to join a side body panel to a floor of a mobile vehicle.

The retained nut assembly enables the side body panels to be bolted to the floor as a one man operation from outside the vehicle. The retained nut assembly enables the bolting operation to be performed without requiring access to the nut. The bolting operation can be performed more quickly are more consistently as there is no reliance on the consistency of the materials being joined and the nut and bolt are already aligned. Since no access to the nut is required, the bolting operation can be performed by a single person. Moreover, since no access to the nut is required, there is no problem of access to the nut during the bolting operation.

### BRIEF DESCRIPTION OF THE DRAWINGS

Embodiments of the invention will now be described with reference to the accompanying drawings, in which:
Figure 1 illustrates an exploded schematic view of a caravan (side panels removed for clarity);
Figure 2 illustrates an exploded partially cut-away view of a side body panel being bolted to a floor panel of the caravan using a retained nut assembly and a bolt;
Figure 3 and 4 illustrate various views of the insert of the retained nut assembly; and
Figure 5 illustrates the nut retained in the insert to form the retained nut assembly.

### DETAILED DESCRIPTION OF EMBODIMENT(S)

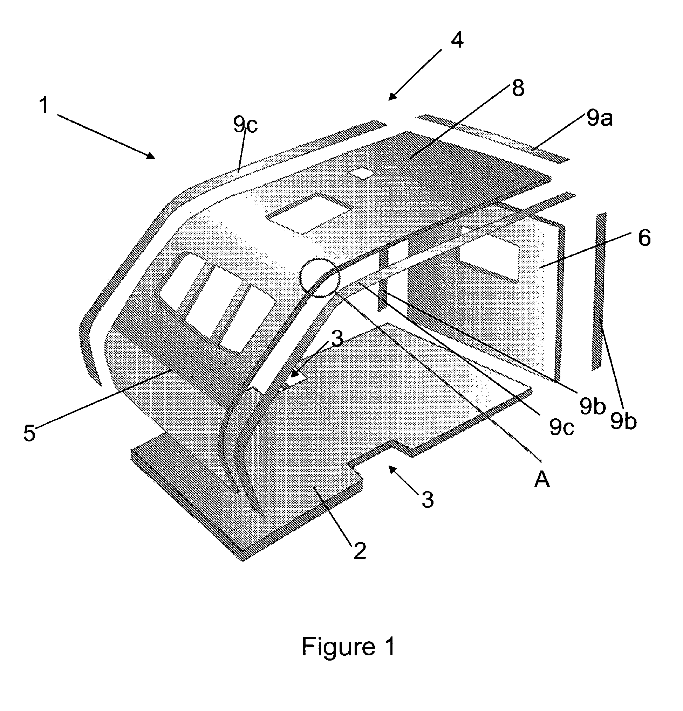

Figure 1 illustrates schematically some key components of a body of a caravan 1. The caravan 1 has a floor 2 having cuts outs 3 for wheels (not shown), which supports a body 4 having a shell construction. The body 4 includes several large composite panels. These form the front 5, back 6, sides 7 (not shown in Figure 1 for clarity) and roof 8. In the embodiment depicted in Figure 1, the front panel 5 and the roof panel 8 are unitary and smoothly transition in the region marked A. However, the front 5 and roof 8 could be formed of separate panels joined together.

The roof panel 8 is joined to the back panel 6 by profiled section 9a. The back panel 6 is joined to each of the side panels 7 by profiled sections 9b. The side panels 7 are joined to the front and roof panels 5, 8 by profiled sections 9c.

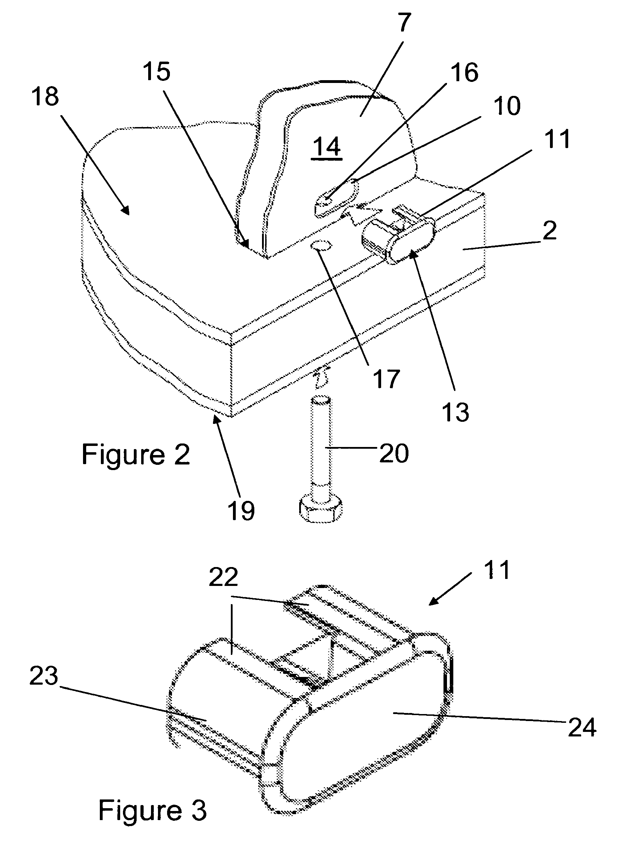

The front 5, back 6 and sides 7 are bolted to the floor 2, as will be described in detail with reference to Figure 2. Figure 2 shows a partially cut-away view of the bolted joint between one of the side panels 7 and the floor 2. This bolted joint is used to join the lower edges of the front 5, back 6 and sides 7 to the floor 2. The side panel 7 has a pocket 10 which receives an insert 11. The insert 11 has a nut 12 retained therein. The insert 11 and nut 12 together form a retained nut assembly 13. The nut 12 is retained in a predetermined position within the insert 11 and is fixed in rotation with respect to the insert, as will be described in detail below.

The pocket 10 is pre-cut in the sidewall 14 of the panel 7. The lower edge 15 of the panel 7 has a through hole 16 connecting the lower edge 15 to the pocket 10. The pocket 10 is centrally aligned with the hole 16. The floor 2 has a though hole 17 extending between upper 18 and lower 19 surfaces of the floor panel 2. The holes 16 and 17 are of the same diameter, and are sized to received a bolt 20. The nut 12 is located within the insert 11 such that when the insert is positioned in the pocket 10, the nut axis of rotation is co-axially aligned with the holes 16 and 17. The threaded shaft of bolt 20 can then be passed up though holes 17 and 16 and threaded onto the nut 12.

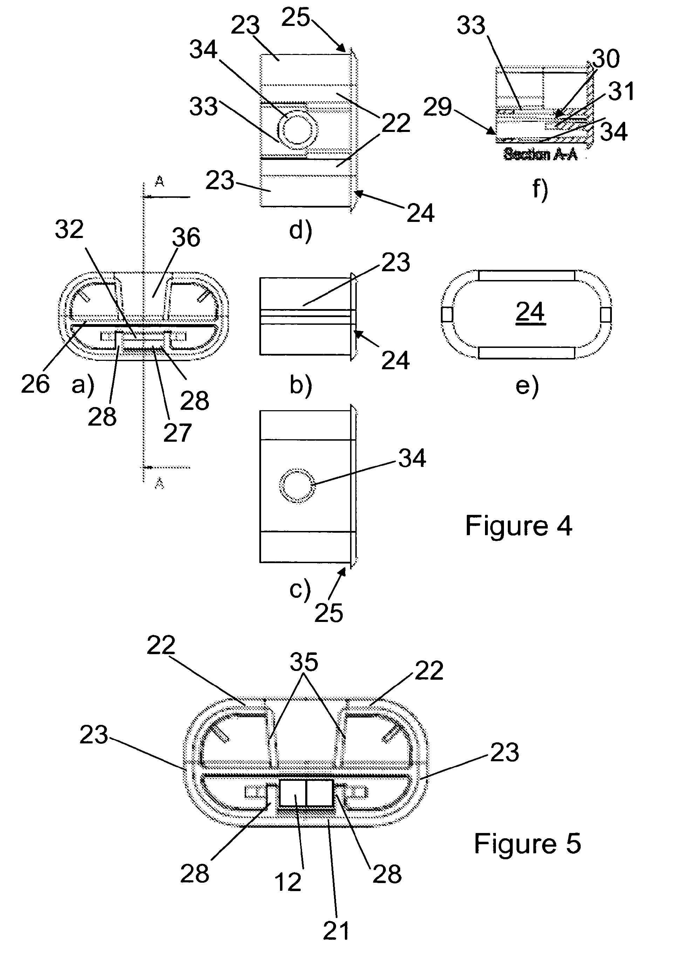

Figures 3 and 4 show the insert 11 in detail. The insert 11 has a generally lozenge shape, having a lower wall 21, upper wall portions 22 opposite the lower wall 21, and arcuate side walls 23. The wall portions 21, 22, 23 terminate at a face plate 24 which extends outwardly beyond the wall portions 21, 22, 23 to define a flange 25 around the periphery of the insert. A rib 26 extends between the arcuate side walls 23. Between the lower wall 21 and the rib 26 is defined a channel 27 having side walls 28. The channel 27 has an open end 29 and a closed end 30. The channel 27 is bounded by the side walls 28, the lower wall 21 and the rib 26. The closed end 30 of the channel 27 has a stop 31. The stop 31 is shaped to cooperate with the facets of nut 12. As shown in Figure 5, the nut 12 is a Nyloc locking hex nut of standard type. The nut 12 is inserted into the channel 27 and slid up to the stop 31. The stop 31 includes a cross member 32 having a pair of surfaces set at an angle of approximately 120 degrees to each other so as to cooperate with a pair of adjacent facets of the nut 12. The stop 31 defines the predetermined position for the nut 12 within the insert 11.

The rib 26 has a through hole 33 which defines a seat for the nut 12. The rib 26 is constructed so as to be resiliently deformable and deflects to allow passage of the nut 12 along the channel from the open end 29 towards the closed end 30. When the nut 12 reaches the closed end 30 of the channel 27 against the stop 31 the nut 12 enters the seat defined by hole 33. As the nut 12 becomes seated, the rib 26 deflects with a "snap" to lock the nut 12 in the predetermined position within the insert 11. The sidewalls 28 of the channel, together with the profiled end stop 31, prevent rotation of the nut 12 with respect to the insert 11 when the nut is in the predetermined position. The nut 12 is held firmly within the insert and is not intended to be removed from the insert 11.

The rib 26 is connected to face plate 24 and is configured to deflect to a greater extent at the open end 29 of the channel 27 than at the closed end 30. This enables the nut 12 to be easily inserted into the channel from the open end 29, and yet the rib 26 acts to securely retain the seated nut in the predetermined position. Rib supports 35 depend downwardly from the upper wall portions 22 to support the rib 26 near the face plate 24.

The lower wall 21 of the insert 11 has a through hole 34 coaxially aligned with the hole 33. The hole 34 is sized to receive bolt 20. The threaded shaft portion of bolt 20 can therefore be passed up through hole 34 and threaded into the nut 12, which is fixed in the position within the insert 11. A space 36 above the rib 26 can accommodate the oversized length of the bolt 20.

The upper wall portions 22 of the insert 11 define a gap which allows the upper wall portions to resiliently deflect towards each other. This enables the insert 11 to be more easily inserted into the side panel 7, and also for the insert 11 to grip the interior surfaces of the pocket 10 in the side panel 7.

Returning to Figure 2, it can be seen that when the insert 11 is introduced into the pocket 10, the flanges 25 engage with the side surface 14 of the panel 7. This accurately positions the insert 11 in the depth direction within the panel 7. The lateral and vertical position of the insert 11 within the panel 7 is determined by the position of the pocket, which can be pre-cut in the panel prior to assembly. In this way, the position of the nut 12 retained by the insert 11 within the panel 7 can be accurately and repeatably controlled to ensure correct alignment with the bolt 20.

The assembly steps for bolting the panel 7 to the floor 2 will now be described. The nut 12 is "snapped" into the predetermined position within the insert 11. The holes 16 and 17 and the pocket 10 can be pre-drilled and cut in the panels 2 and 7. The insert is introduced, as shown in Figure 2, into the pocket 10 in the panel 7 until the flange 25 engages the surface 14 of the panel 7. The panel 7 is offered up to the floor 2 such that the holes 17 and 16 are aligned. The bolt 20 is passed through the hole 17, as shown in Figure 2, and threaded into the nut 12. The bolt 20 is then turned and tightened using a spanner or socket to a predetermined torque.

This process can be repeated to bolt the panel 7 to the floor 2 along their length. The other side panel 7, the back panel 6 and the front panel 5 are bolted to the floor 2 in an identical manner to attach the body 4 to the floor 2 to form the caravan 1.

This method of joining the caravan body 4 to the floor 1 can be completed by one person all from outside the caravan and provides a consistent, repeatable joint. By captivating the nut 12 within the insert 11, there is no need for a second person to hold the nut 12 from within the caravan. This reduces assembly time, and circumvents any access issues which could arise if the nut had to be held by hand from inside the caravan.

The insert 11 can be moulded by injection moulding plastics material as a unitary item. It could, of course, be made of other materials, such as metal, by other manufacturing processes and/or be assembled from multiple components.

The nut 12 can be of the non-locking type if desired, and may have any number of facets, as is commonly known. The shape of the stop in the insert can be adapted accordingly to match the shape of the nut.

The above construction could apply equally to bolting panels of other types of mobile vehicles, such as motor-homes, box vans, etc.

The bolted components in the above embodiment are panels but the invention could be applied to bolting a panel to another component which is not a panel, or even to two components neither of which are panels. Such components may be household furniture, for example.

Although the invention has been described above with reference to one or more preferred embodiments, it will be appreciated that various changes or modifications may be made without departing from the scope of the invention as defined in the appended claims.

## Claims

1. A retained nut assembly (13), comprising an internally threaded nut (12), and an insert (11) configured to receive and retain the nut in a predetermined position within the insert and to prevent relative rotation between the retained nut and the insert, wherein the insert defines a channel (27) having an open end (29) and a closed end (30), such that the nut can be introduced into the channel from the open end, and **characterised by** a resilient rib (26) which clamps the nut in the channel.

2. An assembly according to claim 1, wherein sidewalls (28) of the channel are spaced apart by a distance approximately equal to the width of the nut.

3. An assembly according to claim 1 or 2, wherein the closed end of the channel is shaped to cooperate with the nut.

4. An assembly according to any preceding claim, wherein the insert defines a seat which receives the nut in the predetermined position.

5. An assembly according to claim 4, wherein the seat is formed in the resilient rib.

6. An assembly according to any preceding claim, wherein the insert has a through hole (33, 34) coaxial with the nut axis of rotation.

7. A joint between two components (2, 7), wherein one of the components (7) includes the retained nut assembly (13) according to any preceding claim, and the components are bolted together by threading a bolt (20) into the retained nut (12).

8. A joint according to claim 7, wherein the retained nut assembly is received in a pocket (10) in the one component.

9. A joint according to claim 8, wherein the insert has a flange (25) which lies flush against an outer surface of the component.

10. A joint according to any of claims 7 to 9, wherein one or both of the components is a panel.

11. A joint according to any of claims 7 to 10, wherein the components form part of a mobile vehicle (1).

12. A method of joining two components (2, 7), the method comprising inserting a retained nut assembly (13) in accordance with any of claims 1 to 6 in one (7) of the components, passing a bolt (20) through the other component (2) and threading the bolt into the retained nut (12), and tightening the bolt to join the two components.

13. A method according to claim 12, further comprising cutting a pocket (10) in the one component and then inserting the retained nut assembly into the pocket.

## Patentansprüche

1. Anordnung (13) mit gehaltener Schraubenmutter, mit einer Schraubenmutter (12) mit Innengewinde und einem Einsatz (11), der zum Aufnehmen und Halten der Schraubenmutter in einer vorbestimmten Position im Einsatz und zum Verhindern einer Relativbewegung zwischen der gehaltenen Schraubenmutter und dem Einsatz ausgebildet ist, wobei der Einsatz einen Kanal (27) mit einem offenen Ende (29) und einem geschlossen Ende (30) definiert, sodass die Schraubenmutter von dem offenen Ende in den Kanal eingeführt werden kann, und **gekennzeichnet durch** eine elastische Rippe (26), welche die Schraubenmutter in dem Kanal festklemmt.

2. Anordnung nach Anspruch 1, bei welcher Seitenwände (28) des Kanals in einen Abstand etwa gleich der Breite der Schraubenmutter beabstandet sind.

3. Anordnung nach Anspruch 1 oder 2, bei welcher das geschlossene Ende des Kanals so geformt ist, dass es mit der Schraubenmutter zusammenwirkt.

4. Anordnung nach einem der vorherigen Ansprüche, bei welcher der Einsatz einen Sitz definiert, welcher die Schraubenmutter in der vorbestimmten Position aufnimmt.

5. Anordnung nach Anspruch 4, bei welcher der Sitz in der elastischen Rippe ausgebildet ist.

6. Anordnung nach einem der vorherigen Ansprüche, bei welcher der Einsatz ein Durchgangsloch (33,34) koaxial zur Drehachse der Schraubenmutter aufweist.

7. Verbund zwischen zwei Komponenten (2,7), wobei eine der Komponenten (7) die Anordnung (13) mit gehaltener Schraubenmutter nach einem der vorherigen Ansprüche enthält und die Komponenten durch Schrauben eines Bolzens (20) in die gehaltene Schraubenmutter (12) miteinander verschraubt sind.

8. Verbund nach Anspruch 7, bei welchem die Anordnung mit gehaltener Schraubenmutter in einer Tasche (10) in der einen Komponente aufgenommen ist.

9. Verbund nach Anspruch 8, bei welchem der Einsatz einen Flansch (25) aufweist, der bündig gegen eine Außenfläche der Komponente anliegt.

10. Verbund nach einem der Ansprüche 7 bis 9, bei welchem eine oder beide der Komponenten eine Platte ist/sind.

11. Verbund nach einem der Ansprüche 7 bis 10, bei welchem die Komponenten einen Teil eines Fahrzeuges (1) bilden.

12. Verfahren zum Verbinden von zwei Komponenten (2,7), wobei das Verfahren das Einsetzen einer Anordnung (13) mit gehaltener Mutter gemäß einem der Ansprüche 1 bis 6 in eine (7) der Komponenten, das Führen eines Bolzens (20) durch die andere Komponente (2) und das Schrauben des Bolzens in die gehaltene Schraubenmutter (12) sowie das Anziehen des Bolzens, um die zwei Komponenten zu verbinden, aufweist.

13. Verfahren nach Anspruch 12, ferner mit einem Schneiden einer Tasche (10) in die eine Komponente und dann Einsetzen der Anordnung mit gehaltener Schraubenmutter in die Tasche.

## Revendications

1. Ensemble d'écrou retenu (13) comprenant un écrou fileté intérieurement (12) et un insert (11) configuré pour recevoir et retenir l'écrou, dans une position prédéterminée dans l'insert et pour empêcher la rotation correspondante entre l'écrou retenu et l'insert, dans lequel l'insert définit un canal (27) ayant une extrémité ouverte (29) et une extrémité fermée (30), de sorte que l'écrou puisse être introduit dans le canal depuis l'extrémité ouverte, et **caractérisé par** une nervure résiliente (26) qui fixe l'écrou dans le canal.

2. Ensemble selon la revendication 1, dans lequel les parois latérales (28) du canal sont espacées d'une distance approximativement égale à la largeur de l'écrou.

3. Ensemble selon les revendications 1 ou 2, dans lequel l'extrémité fermée du canal est façonnée de façon à coopérer avec l'écrou.

4. Ensemble selon l'une quelconque des revendications précédentes, dans lequel l'insert définit un logement qui reçoit l'écrou dans la position prédéterminée.

5. Ensemble selon la revendication 4, dans lequel le logement est formé dans la nervure résiliente.

6. Ensemble selon l'une quelconque des revendications précédentes, dans lequel l'insert a un orifice passant (33, 34), coaxial avec l'axe de rotation de l'écrou.

7. Joint entre deux composants (2, 7), dans lequel un des composants (7) comprend l'ensemble d'écrou retenu (13) selon l'une quelconque des revendications précédentes, et les composants sont boulonnés ensemble en filetant un boulon (20) dans l'écrou retenu (12).

8. Joint selon la revendication 7, dans lequel l'ensemble d'écrou retenu est reçu dans une poche (10) dans l'un des composants.

9. Joint selon la revendication 8, dans lequel l'insert a une bride (25) qui se trouve de niveau contre une surface extérieure du composant.

10. Joint selon l'une quelconque des revendications 7 à 9, dans lequel un composant ou les deux sont un panneau.

11. Joint selon l'une quelconque des revendications 7 à 10, dans lequel les composants font partie d'un véhicule mobile (1).

12. Procédé de jonction de deux composants (2, 7), le procédé comprenant l'insertion d'un ensemble d'écrou retenu (13), conformément à l'une quelconque des revendications 1 à 6, dans un (7) des composants, en passant un boulon (20) à travers l'autre composant (2) et en filetant le boulon dans l'écrou retenu (12), et en serrant le boulon pour joindre les deux composants.

13. Procédé selon la revendication 12, comprenant en outre la découpe d'une poche (10) dans l'un des composants et l'insertion ultérieure de l'ensemble d'écrou retenu dans la poche.
